# DEMANDE DE BREVET EUROPEEN

(11) **EP 0 712 776 A1**
(43) Date de publication de la demande: **22.05.1996**
(21) Numéro de dépôt: 95401924.6
(22) Date de dépôt: 22.08.1995
(51) Int. Cl.: B62D 27/02, B62D 25/10, B62D 25/02, B62D 25/06

(54) **Elément de robe de carrosserie d'un véhicule automobile**

(30) Priorité: 16.11.1994 FR 9413823
(71) Demandeur: SOLLAC, F-92800 Puteaux (FR)
(72) Inventeur: Daolio, Gilbert, F-60700 Pont Saint Maxence (FR)
(74) Mandataire: Ventavoli, Roger

(57) **Abrégé**

La présente invention concerne un élément de robe de carrosserie d'un véhicule automobile, constitué de deux pièces (1, 2) mises en forme, une première pièce (1) emboutie formant pièce extérieure de peau et une seconde pièce (2) emboutie, de forme générale identique à la première pièce (1) de manière à pouvoir l'épouser parfaitement, munie de nervures (3), et rendue solidaire de ladite première pièce (1) par une couche de colle uniformément répartie sur toute sa surface, la colle remplissant la totalité des alvéoles formées par les nervures (3).

Les nervures (3) sont orientées dans la seconde pièce (2) de telle manière que lorsque l'élément de robe de carrosserie est monté sur un véhicule automobile, celles-ci soient dans la direction longitudinale du véhicule automobile.

## Description

La présente invention concerne un élément de robe de carrosserie d'un véhicule automobile obtenu par emboutissage d'une tôle plane en acier et n'exigeant pas de grandes déformations de la tôle plane en acier, plus particulièrement un capot ou un pavillon de toit d'un véhicule automobile.

Un tel élément est habituellement réalisé sous presse, par emboutissage d'une tôle d'acier. La pièce emboutie est ensuite détourée, c'est à dire que l'on découpe la partie non utile de la tôle emboutie pour obtenir la forme définitive de l'élément de robe de carrosserie.

Compte tenu du fait qu'un tel élément n'exige pas de grandes déformations de la tôle plane en acier et n'est même pas déformé par endroit, on rencontre souvent des problèmes de non tension de ladite tôle plane pendant son emboutissage, ce qui entraîne le fait que, lorsque l'élément est en place sur l'automobile, on assiste à un phénomène d'affaissement de l'élément sous son propre poids et des problèmes de résistance à l'indentation. C'est particulièrement le cas des capots et des pavillons de toit de véhicules automobiles.

Afin de s'affranchir de ces inconvénients, ce type d'élément n'étant pas déformé par endroits nécessite donc d'être doublé par une autre pièce de renfort qui rigidifie l'ensemble.

Il est donc connu d'utiliser des éléments de robe de carrosserie du type capot ou pavillon de toit constitués d'une première pièce formant pièce extérieure de peau renforcée par un squelette de raidissement soudé ou collé sur la première pièce de peau, lui conférant ainsi une plus grande résistance.

Habituellement le squelette de raidissement est collé à la première pièce de peau lorsque ceux-ci sont en matière plastique moulée, et est soudé ou soudé et collé à la première pièce de peau lorsque ceux-ci sont en tôles embouties.

La présente invention se rapporte à un élément de robe de carrosserie d'un véhicule automobile obtenu par emboutissage d'une tôle plane en acier ce qui fait qu'on ne s'intéresse ici qu'à ce type d'élément, bien que l'invention puisse s'appliquer à un élément de robe de carrosserie en matière plastique.

Dans le cas des éléments de robe de carrosserie du type capot ou pavillon de toit en acier de l'état de la technique, la première pièce de peau a une épaisseur environ égale à 0,7 mm et le squelette de raidissement est généralement réalisé dans une tôle d'épaisseur environ égale à 0,8 mm, ce qui confère à l'élément un poids non négligeable.

A titre d'exemple, un capot d'un véhicule familial dit de catégorie moyenne réalisé selon cette technique pèse un poids généralement supérieur à 14 kg.

Or le poids est l'ennemi numéro un dans le domaine de l'automobile car une augmentation significative du poids d'un véhicule entraîne obligatoirement, à performances égales, une augmentation de la consommation.

De plus cette solution ne permet pas de résorber totalement les déformations possibles de l'élément de robe de carrosserie dues à la non tension dudit élément pendant son emboutissage.

La présente invention a pour but de proposer un compromis entre allégement et rigidité maximale de l'élément de robe de carrosserie, c'est à dire de réaliser un gain de poids sans altérer la rigidité de l'ensemble, ni l'aspect de la pièce de peau de l'élément de robe de carrosserie, tout en résorbant totalement les déformations possibles dues à la non tension dudit élément lors de son emboutissage.

La présente invention concerne plus particulièrement un élément de robe de carrosserie d'un véhicule automobile obtenu par emboutissage d'une tôle plane en acier et n'exigeant pas de grandes déformations de la tôle plane en acier, caractérisé en ce qu'il est constitué de deux pièces mises en forme, une première pièce, obtenue par emboutissage d'une tôle, formant pièce extérieure de peau et, une seconde pièce, obtenue par emboutissage d'une tôle, de forme générale identique à la première pièce de manière à pouvoir l'épouser parfaitement, munie de nervures, et rendue solidaire de ladite première pièce par une couche de colle uniformément répartie sur toute sa surface, la colle remplissant la totalité des alvéoles formées par les nervures.

Selon d'autres caractéristiques de l'invention :
- les nervures sont orientées dans la seconde pièce de telle manière que lorsque l'élément de robe de carrosserie est monté sur un véhicule automobile, celles-ci soient dans la direction longitudinale du véhicule automobile,
- les pièces ont une épaisseur comprise entre 0,25 et 0,35 mm,
- la couche de colle a, au niveau des zones de la seconde pièce non munie des nervures, une épaisseur comprise entre 0,25 et 0,35 mm,
- la colle est une colle du type résine époxyde liquide, exempte de solvants et mise en oeuvre avec un durcisseur et un agent moussant.
- l'élément de robe de carrosserie constitue le capot du véhicule automobile,
- l'élément de robe de carrosserie constitue le pavillon de toit du véhicule automobile,

Les caractéristiques et avantages de l'invention apparaîtront au cours de la description qui va suivre, donnée uniquement à titre d'exemple, faite en référence aux dessins annexés, sur lesquels :
- La figure 1 est une vue en perspective des deux pièces constitutives de l'élément de robe de carrosserie selon l'invention ;
- La figure 2 est une vue partielle en coupe selon la ligne 2-2 de la figure 1.

L'élément de robe de carrosserie d'un véhicule automobile selon l'invention, obtenu par emboutissage d'une tôle plane en acier et n'exigeant pas de grandes déformations de la tôle plane en acier, est constitué de deux pièces mises en forme, une première pièce, obtenue par emboutissage d'une tôle, formant pièce extérieure de peau et une seconde pièce, obtenue également par emboutissage d'une tôle, de forme générale identique à la première pièce de manière à pouvoir l'épouser parfaitement, munie de nervures, et rendue solidaire de ladite première pièce par une couche de colle uniformément répartie sur toute sa surface, la colle remplissant la totalité des alvéoles formées par les nervures.

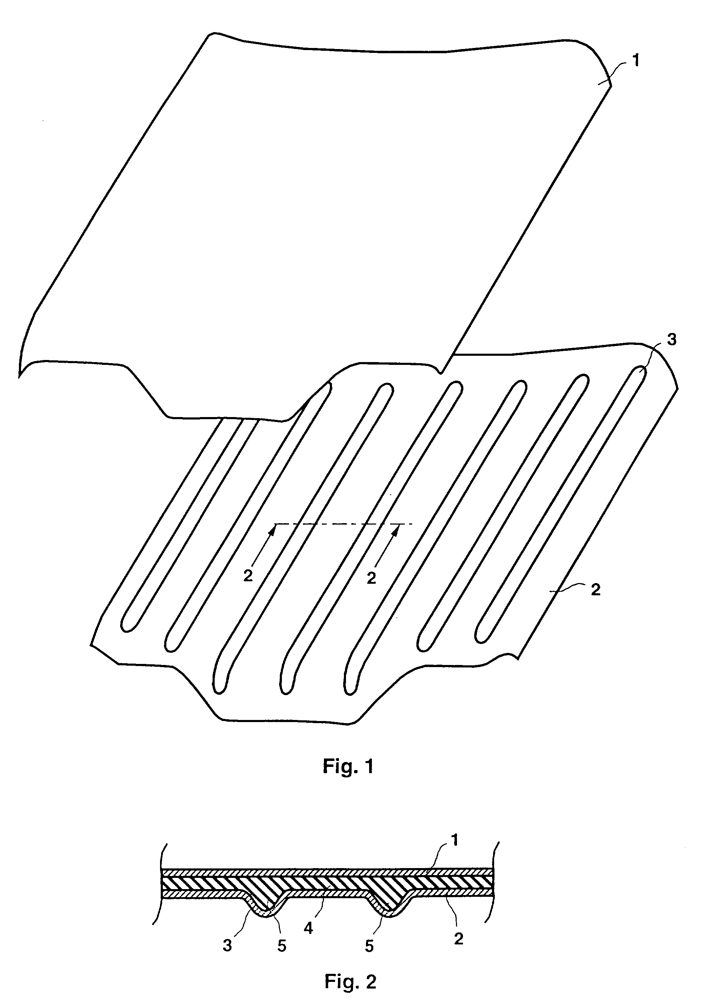

Comme on le voit sur les figures 1 et 2 représentant un capot de véhicule automobile selon l'invention, l'élément de robe de carrosserie, en l'occurrence le capot, est constitué de deux pièces 1 et 2 mises en forme.

La première pièce 1 est emboutie à partir d'une tôle plane en acier, puis est détourée afin d'obtenir la forme définitive de l'élément. Cette première pièce 1 emboutie forme la pièce extérieure de peau de l'élément de robe de carrosserie, c'est à dire la pièce visible lorsque ledit élément est monté sur le véhicule automobile.

La seconde pièce 2 est également emboutie à partir d'une tôle plane et présente une forme générale identique à la première pièce de manière à pouvoir l'épouser parfaitement.

Cette seconde pièce 2 est munie de nervures 3.

Préférentiellement, ces nervures 3 sont orientées dans la seconde pièce 2 de telle manière que lorsque l'élément de robe de carrosserie est monté sur le véhicule automobile, celles-ci soient dans la direction longitudinale dudit véhicule.

Il est bien évident qu'il est tout à fait possible de réaliser en plus des nervures dans d'autres directions si des considérations de tenue mécaniques, par exemple de résistance à la déformation, l'exigent.

Ainsi comme on le voit sur la figure 1 représentant un capot de véhicule selon l'invention, la seconde pièce 2 est munie d'une série de nervures 3 parallèles entre elles et orientées dans le sens longitudinal dudit capot.

Dans cet exemple, les nervures longitudinales suffisent car, outre leur rôle de rigidification du capot afin de résister à son affaissement sous son propre poids, elles participent à sa tenue en cas de choc frontal du véhicule.

Les deux pièces embouties 1 et 2 sont rendues solidaires entre elles au moyen d'une couche de colle 4 uniformément répartie sur toute leur surface.

La présence des nervures 3 est déterminante car ces nervures forment des alvéoles 5 qui vont être remplies par la colle et qui vont rigidifier l'ensemble.

Il est donc important que la couche de colle 4 soit uniformément répartie sur toute la surface de la seconde pièce emboutie 2 et remplisse la totalité des alvéoles 5 formées par les nervures 3.

A titre d'exemple, la colle utilisée est une colle du type résine époxyde liquide, exempte de solvants et mise en oeuvre avec un durcisseur et un agent moussant.

Les pièces 1 et 2 ont une épaisseur comprise entre 0,25 et 0,35 mm, de préférence égale à 0,30 mm.

La couche de colle 4 a, au niveau des zones de la seconde pièce 2 non munie des nervures 3, une épaisseur comprise entre 0,25 et 0,35 mm, de préférence égale à 0,30 mm.

Ainsi la première pièce 1 emboutie formant pièce extérieure de peau de l'élément de robe de carrosserie selon l'invention est rigidifié par l'ensemble pièce emboutie 2 - couche de colle 4.

A titre de variante de l'invention, on peut utiliser une mousse de polyuréthanne rigide à la place de la colle. Cette solution nécessite de souder entre elles, par exemple par points, la périphérie des deux pièces embouties 1 et 2.

Un intérêt de l'élément de robe de carrosserie selon l'invention réside dans le fait que, à rigidité égale, il suffit d'utiliser des pièces embouties 1, 2 de faible épaisseur, environ 0,30 mm, ce qui permet de réaliser un gain de poids non négligeable, car la couche de colle 4 participe à la rigidité de l'ensemble.

A titre d'exemple, un capot d'un véhicule familial dit de catégorie moyenne réalisé selon l'invention pèse un poids inférieur à 12 kg.

Enfin, un gros avantage réside dans le fait que, la couche de colle 4 étant uniformément répartie sur toute la surface entre les deux pièces 1 et 2, il n'y a aucun espace libre entre les deux dites pièces, ce qui accroît considérablement la résistance à l'indentation de l'élément de robe de carrosserie selon l'invention.

L'invention trouve particulièrement application dans la réalisation de capots et de pavillons de toit de véhicules automobiles, et plus généralement pour la réalisation de toutes les pièces non totalement tendues au cours de leur emboutissage.

## Revendications

1. Elément de robe de carrosserie d'un véhicule automobile obtenu par emboutissage d'une tôle plane en acier et n'exigeant pas de grandes déformations de la tôle plane en acier, caractérisé en ce qu'il est constitué de deux pièces (1, 2) mises en forme, une première pièce (1), obtenue par emboutissage d'une tôle, formant pièce extérieure de peau et une seconde pièce (2), obtenue par emboutissage d'une tôle, de forme générale identique à la première pièce (1) de manière à pouvoir l'épouser parfaitement, munie de nervures (3), et rendue solidaire de ladite première pièce (1) par une couche de colle (4) uniformément répartie sur toute sa surface, la colle remplissant la totalité des alvéoles (5) formées par les nervures (3).

2. Elément de robe de carrosserie d'un véhicule automobile selon la revendication 1, caractérisé en ce que les nervures (3) sont orientées dans la seconde pièce (2) de telle manière que lorsque l'élément de robe de carrosserie est monté sur un véhicule automobile, celles-ci soient dans la direction longitudinale du véhicule automobile.

3. Elément de robe de carrosserie d'un véhicule automobile selon l'une des revendications 1 ou 2, caractérisé en ce que les pièces (1, 2) ont une épaisseur comprise entre 0,25 et 0,35 mm.

4. Elément de robe de carrosserie d'un véhicule automobile selon l'une des revendications 1 ou 2, caractérisé en ce que la couche de colle (4) a, au niveau des zones de la seconde pièce 2 non munie des nervures (3), une épaisseur comprise entre 0,25 et 0,35 mm.

5. Elément de robe de carrosserie d'un véhicule automobile selon l'une des revendications 1 à 4, caractérisé en ce que la colle est une colle du type résine époxyde liquide, exempte de solvants et mise en oeuvre avec un durcisseur et un agent moussant.

6. Elément de robe de carrosserie d'un véhicule automobile selon l'une des revendications 1 à 4, caractérisé en ce qu'il constitue le capot du véhicule automobile.

7. Elément de robe de carrosserie d'un véhicule automobile selon l'une des revendications 1 à 4, caractérisé en ce qu'il constitue le pavillon de toit du véhicule automobile.
